# EUROPEAN PATENT SPECIFICATION

(11) **EP 3 656 684 B1**
(45) Date of publication and mention of the grant of the patent: **21.07.2021**
(21) Application number: 18208121.6
(22) Date of filing: 23.11.2018
(51) Int. Cl.: B65B 7/28, B67B 3/20, B67B 3/28, B65B 57/08, B65B 59/02, B65B 65/02, B65G 54/02, H02K 41/03, B65B 61/18

(54) **CAPPING APPARATUS FOR A SYSTEM FOR PRODUCTION OF PACKAGED FOOD PRODUCTS**
ABDECKVORRICHTUNG FÜR EIN SYSTEM ZUR HERSTELLUNG VON VERPACKTEN NAHRUNGSMITTELPRODUKTEN
DISPOSITIF DE CAPSULAGE POUR UN SYSTÈME DE PRODUCTION DE PRODUITS ALIMENTAIRES CONDITIONNÉS

(43) Date of publication of application: 27.05.2020
(73) Proprietor: Tetra Laval Holdings & Finance S.A., 1009 Pully (CH)
(72) Inventor: BORGHI, Davide, 41121 Modena (IT); FLORE, Stefano, 40133 Bologna (IT); SACCHETTI, Elena, 42015 Correggio (IT); ROSSI, Stefano, 42123 Reggio Emilia (IT)
(74) Representative: Tetra Pak - Patent Attorneys SE

(56) References cited:
- EP-A1- 0 619 267
- EP-A1- 2 540 658
- EP-A1- 2 927 132
- WO-A1-2017/145051
- US-A1- 2015 340 260
- US-A1- 2018 072 552
- US-B1- 6 777 833

## Description

### Technical Field

The invention generally relates to systems or plants for production of packaged food products, and in particular containers having an attached capping device or "cap".

### Background Art

The ever-growing demand of packaged food products causes a need for food producers to make more frequent changes in their production. Such changes include changing the production flow between different machines in a plant for production of packaged food products. With the packaging lines traditionally being used, such changes may be both expensive and time consuming to implement since they generally involve manual reconfiguration of the mechanical structure of machines and conveyors within the production plant.

Thus, there is a general need to facilitate changes in the production flow within plants for production of packaged food products.

It is also a general need to simplify the mechanical structure of machines and conveyors within the production plant.

Many packages containing food products has a capping device or "cap" that may be manipulated by a user to expose an opening on the package, and possibly close the opening after use. Often, the capping device is a separate unit which is integrated into the package by a dedicated machine, known as a "cap applicator machine", "capper" or "capping machine" in the art. Such machines are mechanically complicated and require careful and time-consuming alignment and adaptation to each specific combination of capping device and package.

*Further background art can be found in* EP2927132 *disclosing an applying unit that can apply lids to packages at a very high output rate.*

### Summary

It is an object of the invention to at least partly overcome one or more limitations of the prior art.

One such object is to provide a technique that simplifies attaching of capping devices to containers in a system for production of packaged food products.

One or more of these objects, as well as further objects that may appear from the description below, are at least partly achieved by an apparatus for attaching capping devices to containers, a method of attaching capping devices to containers, and a computer-readable medium according to the independent claims, embodiments thereof being defined by the dependent claims.

A first aspect of the invention is an apparatus for attaching capping devices to containers for a system for production of packaged food products. The apparatus comprises: a conveyor configured to suspend first items, a transportation track, and a plurality of carriers for arrangement on the transportation track, the respective carrier comprising a support surface for one or more second items. The first items are capping devices and the second items are containers, or vice versa. The transportation track comprises a first magnetic arrangement, and the respective carrier comprises a second magnetic arrangement. The apparatus further comprises a control device which is configured to operate one of the first and second magnetic arrangements to move the respective carrier on the transportation track into a position beneath the conveyor to align a second item on the respective carrier with a first item suspended by the conveyor. The control device is further configured to move the support surface of the respective carrier towards the suspended conveyor to engage the second item with the first item.

In one embodiment, the capping device comprises a body part defining an opening and a lid part arranged to cover the opening.

In one embodiment, the apparatus further comprises a device configured to apply an adhesive to at least one of the first and second items.

In one embodiment, the control device is further configured, when engaging the second item with the first item, to rotate the support surface around an axis which is perpendicular to the support surface.

In one embodiment, the capping device is a lid part with a first thread, and the container comprises a tubular portion with a second thread, wherein rotating the support surface engages the first and second threads.

In one embodiment, the control device is further configured to, when engaging the second item with the first item, tilt the support surface from a horizontal plane to align a top surface of the second item with an bottom surface of the first item.

In one embodiment, the control device is configured to adapt the speed of the selected carrier in a feed direction to the speed of the conveyor in the feed direction.

In one embodiment, the control device is configured to operate at least one of the first and second magnetic arrangements to move the respective carrier towards the suspended conveyor to engage the second item with the first item.

In one embodiment, the respective carrier comprises a moveable platform that defines at least part of the support surface and a platform actuator for moving the platform in relation to the carrier, wherein the control device is configured to operate the platform actuator to move the support surface of the respective carrier to engage the second item with the first item.

In one embodiment, the respective carrier comprises a gripping mechanism for engaging the one or more second items on the support surface.

In one embodiment, the first magnetic arrangement comprises an array of coils, and the second magnetic arrangement comprises an array of magnets.

In one embodiment, the control device is further configured to operate at least one of the first and second magnetic arrangements to levitate the respective carrier over the transportation track, while the respective carrier is moved on the transportation track.

A second aspect of the invention is a method of attaching capping devices to containers for a system for production of packaged food products. The method comprises: arranging first items to be suspended from a conveyor, and arranging second items on support surfaces of carriers on a transportation track. The first items are capping devices and the second items are containers, or vice versa. The method further comprises: operating one of a first magnetic arrangement in the transportation track and a second magnetic arrangement in the respective carrier to move the respective carrier on the transportation track into a position beneath the conveyor to align a second item on the respective carrier with a first item suspended by the conveyor, and controlling the respective carrier to move the support surface towards the suspended conveyor to engage the second item with the first item.

Any one of the embodiments of the first aspect may be adapted and implemented as an embodiment of the second aspect.

A third aspect of the invention is a computer-readable medium comprising computer instructions which, when executed by a processing device, cause the processing device to perform the method of the second aspects or any of its embodiments.

Still other objectives, as well as features, aspects and advantages of the invention will appear from the following detailed description as well as from the drawings.

### Brief Description of the Drawings

Embodiments of the invention will now be described, by way of example, with reference to the accompanying schematic drawings.
FIG. 1 a perspective view of an example plant for production of packaged food products.
FIG. 2A is an elevated side view of an apparatus for transportation of containers during production of packaged food products, and FIG. 2B is a perspective view of a carrier in the apparatus of FIG. 2A.
FIGS 3A-3F are elevated side views of embodiments of the carrier in FIG. 2B for enabling change of elevation, rotation and tilting of a container.
FIGS 4A-4D are elevated side views of examples of gripping mechanisms for holding a container on a carrier.
FIGS 5A-5B are perspective views of examples of capping systems.
FIGS 6-9 are elevated side views of capping stations in accordance with different embodiments.
FIG. 10 is a flow chart of a capping method in accordance with an embodiment.

### Detailed Description

Embodiments of the present invention will now be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure may satisfy applicable legal requirements.

Also, it will be understood that, where possible, any of the advantages, features, functions, devices, and/or operational aspects of any of the embodiments of the present invention described and/or contemplated herein may be included in any of the other embodiments of the present invention described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments of the invention. As used herein, the term "and/or" comprises any and all combinations of one or more of the associated listed items. As used herein, the term "food product" comprises any substance that can be used or prepared for use as food by humans or animals. Such food products include, without limitation, beverages, dairy products, sauces, oils, creams, custards, soups, purees, broths, vegetables, desserts, mayonnaise, wine, pet food, whey powder, etc.

Like reference signs refer to like elements throughout.

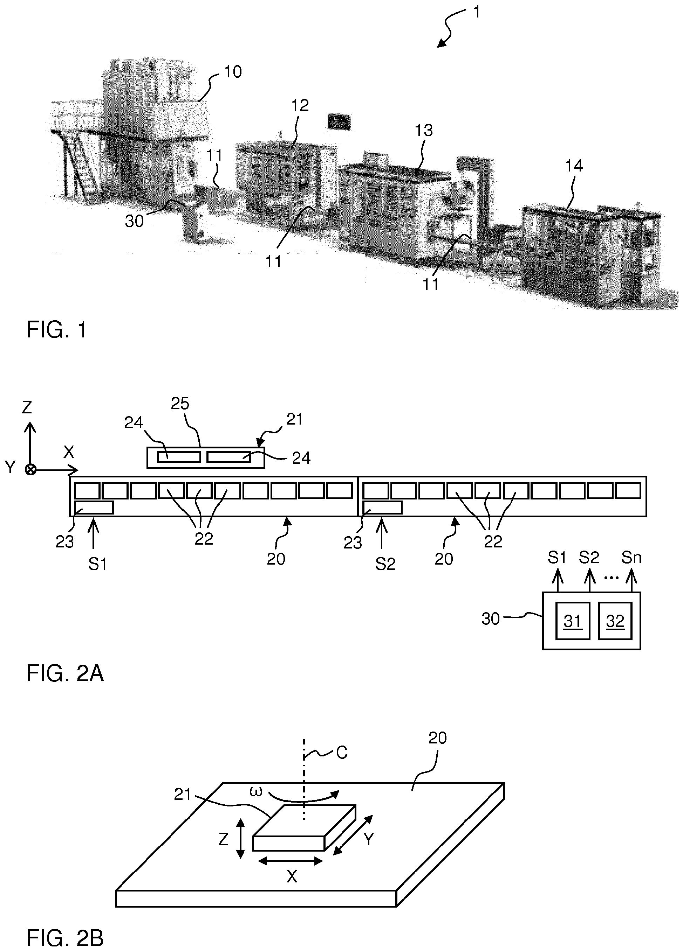

FIG. 1 shows an exemplifying production plant or system 1 which is configured to produce packaged food products. The food products are packaged in sealed containers or packages, which may be at least partly made of a paperboard material or a plastic material. For example, the container may be a carton or a bottle, which are well-known in the art. In the illustrated example, the system 1 comprises a sequence of machines 10, 12, 13 and 14 connected by conveyors 11 for transporting packages from one machine to the next. A filling machine 10 is configured to fill a food product into containers. An accumulator machine 12 is configured to, if necessary, accumulate containers produced by the filling machine 10. A capping machine 13 is configured to attach capping devices to the containers. A secondary packing machine 14 may be configured to arrange the containers in groups and arrange each group in a secondary packaging, e.g. stretch foil, shrink foil, a cardboard tray or a cardboard carton.

In an alternative configuration, capping devices are attached to containers before the containers are filled with the food product, e.g. by a capping machine arranged upstream of the filling machine 10 or a capping station integrated into the filing machine 10.

Embodiments of the present invention start out from the insight that it would be advantageous to at least partly transport the containers within the system 1 by use of magnetically suspended "planar motors". Such planar motors are known in the field of photolithography and semiconductor processing, where they are implemented to provide micrometer- or nanometer-scale positioning of wafers or the like in clean spaces where particles must be kept at a minimum. Magnetically suspended planar motors, also known as maglev motors, are operable with minimum generation of contaminating particles due to low friction. Although these motivations are not primary objectives in the field of packaged food products, the present inventors have realized, by insightful reasoning, that it is both advantageous and viable to implement such planar motors in systems for production of packaged food products. Examples of magnetically suspended planar motors for micrometer- or nanometer-scale positioning are given in US6777833, US8686602, US6208045, US6259174 and US5641054. Further examples of magnetically suspended planar motors are found in WO2006/054243, WO2009/083889, and the article "Electro-dynamic planar motor" by Compter et al., published in Proc. of Mechatronics 2002, University of Twente, 24-26 June 2002, pages 81-87.

The implementation of magnetically suspended planar motors in systems for production of packaged food products has the potential of reducing the need for external guides as well as mechanical bearings, which in turn leads to reduced wear and MTBF (Mean Time Between Failures). Ultimately, this results in reduced operating cost of the system. A magnetically suspended planar motor is effectively a direct drive mechanism, which enables dynamic control of position, velocity, acceleration and orientation (attitude) of a capping device or a container. By proper implementation on the system, these properties may result in increased flexibility of production, e.g. with respect to changes in the format of the capping devices or containers.

FIG. 2A illustrates an embodiment of a magnetically suspended planar motor for use in the system of FIG. 1. The planar motor comprises a stationary (fixed) base element 20 with a planar top surface, and a moveable carrier 21 which is arranged to overlie the base element 20. As indicated in FIG. 2A, identical base elements 20 may be tiled in an X dimension, and possibly in a Y dimension (not shown), to define an extended transportation surface. The transportation surface may form a transportation track in the system 1, e.g. to replace at least part of one or more of the conveyors 11 in FIG. 1, or to transport containers or capping devices, as applicable, within any one of the machines 10, 12, 13 and 14 in FIG. 1. FIG. 2A includes an orthogonal XYZ coordinate system, in which the X dimension is parallel to the feed direction of such a transportation track, the Y dimension is a lateral dimension (orthogonal to the X dimension on the top surface of the base element 20), and the Z dimension is a levitation dimension (perpendicular to the top surface of the base element 20). As indicated schematically in FIG. 2A, the top surface of the carrier 21 defines a support surface 25 for carrying capping devices or containers in the system 1.

The respective base element 20 comprises a first magnetic arrangement and the carrier 21 comprises a second magnetic arrangement. One of the magnetic arrangements is "active" and operable to selectively generate a magnetic field that interacts with the other magnetic arrangement, which is passive, to move or propel the carrier 21 in relation to the base element 20, at least in the X dimension, and preferably also in the Y dimension. In one embodiment, the magnetic field is generated by selectively applying commutation currents to an array of coils in the active magnetic arrangement. The active magnetic arrangement may be installed in either of the base element 20 and the carrier 21. In a currently preferred embodiment, the active magnetic arrangement is located in base element 20, to obviate the need to supply control signals and power signals to the moving carrier 21.

Consequently, in the example of FIG. 2A as well as the following examples, the first magnetic arrangement in the base element 20 is active and comprises an array of coils 22 and associated circuitry 23 for providing and/or generating commutation currents for the coils 22. The second magnetic arrangement in the carrier 21 comprises an array of magnets 24 and thus passive. A control device 30 is configured to generate control signals S1-Sn for the base elements 20 to control the movement of the carrier 21 on the base elements 20. The control signals S1-Sn may comprise the above-mentioned commutation signals for the coils 22 in the respective base element 21. Alternatively, if the circuitry 23 is configured to generate the commutation signals, the control device 30 may supply power to the respective base element 20 in addition to the control signals S1-Sn, which may designate a desired position or trajectory of the carrier 21 on the respective base element 20. As indicated in FIG. 2A, the control device 30 may operate the planar motor to levitate the carrier 21, by causing the coils 22 to generate a magnetic field that arranges the carrier 21 with a small spacing or gap between the bottom surface of the carrier 21 and the top surface of the respective base element 20.

The control device 30 may be further configured to generate control signals (not shown) for controlling and synchronizing operation of the system 1.

In the illustrated embodiment, the control device 30 comprises a processor 31 and computer memory 32. The processor 30 may e.g. include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). A control program comprising computer instructions is stored in the memory 32 and executed by the processor 31 to generate the control signals S1 for the planar motor. The control program may be supplied to the control device 30 on a computer-readable medium, which may be a tangible (non-transitory) product (e.g. magnetic medium, optical disk, read-only memory, flash memory, etc) or a propagating signal.

FIG. 2B illustrates an embodiment of the planar motor, in which the carrier 21 is independently controllable for movement in four degrees of freedom (DOF), specifically the X dimension, the Y dimension, the Z dimension and for rotation w around an axis C which is perpendicular to the support surface 25 of the carrier 21. The rotation axis C may, but need not, be located at the geometric center of carrier 21.

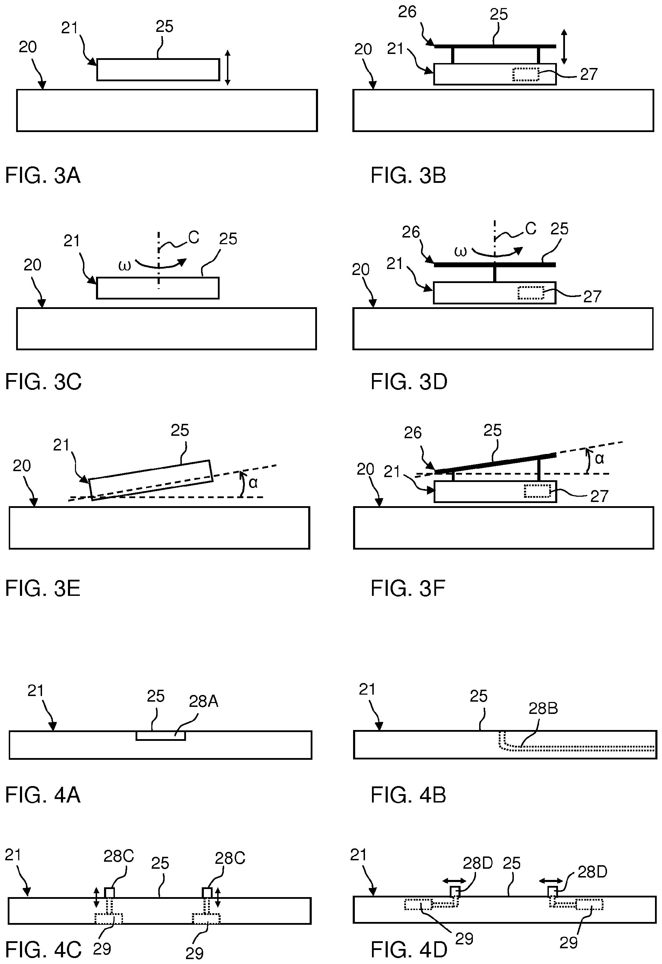

FIG. 3A illustrates an embodiment of a planar motor, in which a change in the levitation of the carrier 21, in the Z dimension, may be effected by modifying the magnetic field generated by the first magnetic arrangement in the base element 20. Thereby, the support surface 25 may be controllably moved away from and towards the base element 21.

FIG. 3B illustrates an embodiment, in which a moveable platform 26 is installed in the carrier 21 to define at least part of the support surface 25. A platform actuator 27 is arranged in the carrier 21 to translate the platform 27 away from and towards the carrier 21. This embodiment may relax the requirements on the first and/or second magnetic arrangements. The actuator 27 may be any form of motor, e.g. electric, pneumatic, or hydraulic, which may be controlled by a control signal generated by the control device 30 and transmitted by wire or wirelessly to the carrier 21. In an alternative, the actuator 27 may be controlled by the magnetic field generated by the first magnetic arrangement in the base element 20. In a further alternative, the actuator is omitted and the movement of the platform 26 is controlled by the magnetic field generated by the first magnetic arrangement in the base element 20.

FIG. 3C illustrates an embodiment of a planar motor, in which the rotation ω of the carrier 21 around the axis C may be effected by modifying the magnetic field generated by the first magnetic arrangement in the base element 20. Thereby, the support surface 25 may be controllably rotated with respect to an arbitrary reference direction in the XY plane.

FIG. 3D illustrates an embodiment, in which a rotatable platform 26 is installed in the carrier 21 to define at least part of the support surface 25. Controlled rotation of the platform 26 may be effected in analogy with the embodiment in FIG. 3B, e.g. by actuator 27.

FIG. 3E illustrates an embodiment of a planar motor, in which a change in tilt angle α of the carrier 21, e.g. in the X dimension or the Y dimension, may be effected by modifying the magnetic field generated by the first magnetic arrangement in the base element 20. Thereby, the support surface 25 may be controllably tilted from a horizontal plane.

FIG. 3F illustrates an embodiment, in which a moveable platform 26 is installed in the carrier 21 to define at least part of the support surface 25. The moveable platform 26 is arranged for tilting in at least one direction. Controlled tilting of the platform 26 may be effected in analogy with the embodiment in FIG. 3B, e.g. by actuator 27.

It should be understood that two or more of the embodiments in FIGS 3A-3F may be combined to provide any desirable number of DOF. For example, the planar motor as described herein may exhibit up to 6 independent DOF, including movement in the X, Y and Z dimensions, rotation around the axis C (also known as "yaw"), tilting in the X dimension (also known as "pitch") and tilting in the Y dimension (also known as "roll").

FIGS 4A-4D show examples of gripping mechanisms for holding one or more items (containers or capping devices) onto the support surface 25. In FIG. 4A, the gripping mechanism comprises one or more electromagnets 28A for generating a magnetic field to attract the bottom surface of the respective item which, in this example, comprises a ferromagnetic material. In FIG. 4B, the gripping mechanism comprises a conduit 28B that opens into the support surface 25 and is connected to a source (not shown) for generating a sub-atmospheric pressure. In FIG. 4C, the gripping mechanism comprises one or more projection elements 28C (two shown), which are moveable in a direction perpendicular to the support surface 25 between a retraced state in which the respective projection element 28C is located level with or beneath the support surface 25, and a projecting state in which the respective projection element 28C projects from the support surface 25 to define a containment region that mates with one or more item. In FIG. 4D, the gripping mechanism comprises projection elements 28D (two shown), which are moveable in a direction parallel to the support surface 25 to be pressed against one or more items on the support surface 25. In one example, the projection elements 28D may be arranged and configured similar to jaws of a mechanical chuck. As indicated in FIGS 4C and 4D, one or more actuators 29 (two shown) may be arranged in the carrier 21 to move the projection elements 28C, 28D. The actuator(s) 29 may be any form of motor, e.g. electric, pneumatic, or hydraulic. The gripping mechanisms in FIGS 4A-4D are "active", in the sense that they may be selectively operated to switch between engaging and releasing the item(s) on the support surface 25, e.g. based on a control signal from the control device 30 (FIG. 1).

In an alternative, the respective carrier 21 comprises a passive gripping mechanism, e.g. one or more fixed projections (cf. FIG. 4C), one or more permanent magnets (cf. FIG. 4A), or a high friction surface structure. It is also conceivable that the gripping mechanism is omitted.

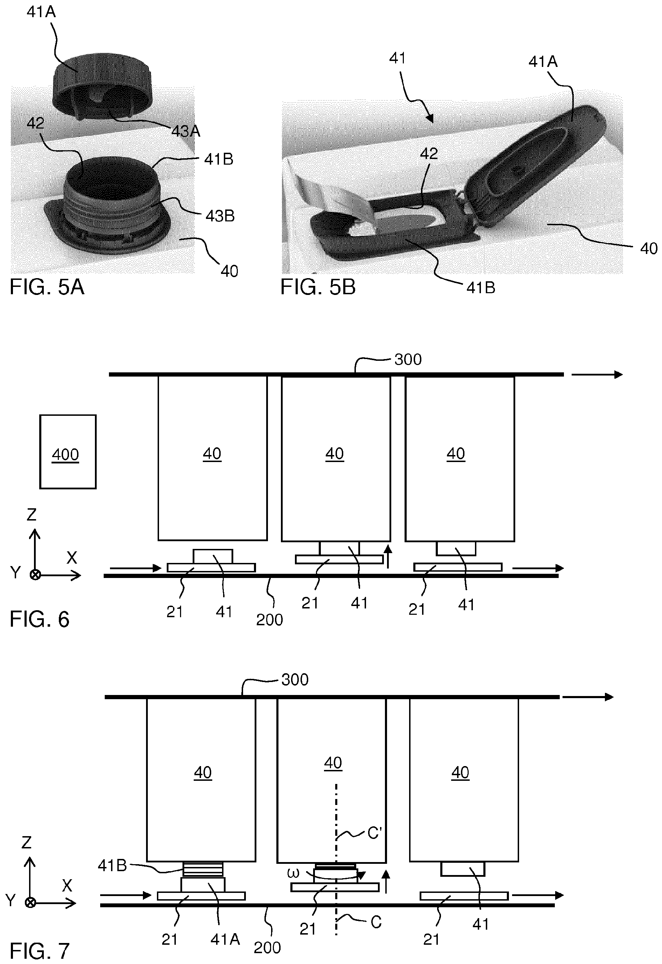

The inventors have realized that the movement functions as exemplified in FIGS 2-3 may provide distinct advantages when implemented for attaching capping devices to containers in a system for production of packaged food products. Related embodiments will be described with reference to FIGS 5-10.

FIGS 5A-5B show two non-limiting examples of cap systems that may be used in embodiments of the invention. The cap system in FIG. 5A is of screw-type and comprises a lid 41A and a main body 41B. The main body 41B comprises a protruding collar or tubular portion that defines an opening 42 and has male threads 43B on its outer periphery. The lid 41A has, on its inner periphery, female threads 43A adapted for engagement with the male threads 43B. A capping operation for providing the cap system in FIG. 5A on a container 40 may be implemented in different ways. In one implementation, a cap module with the lid 41A screwed onto the main body 41B is attached to the container 40, e.g. by use of adhesive such as hot melt. Such an assembled cap module is given reference numeral 41 in the following. In another implementation, the main body the lid 41 is screwed onto the main body 41B which has been previously attached to or integrated in the container 40. The cap system in FIG. 5B is of flip-lid type and is an integrated cap module 41 with a main body 41B that defines an opening 42 and a lid 41A with a hinged connection to the main body 41B. The cap module 41, with the lid 41B folded onto the main body 41B, is attached to the container 40, e.g. by use of adhesive such as hot melt. Generally, in all of these examples, a "capping device" is attached to the container 40, be it a cap module 41 or a lid 41A.

FIG. 6 illustrates a capping station which comprises an overhead conveyor 300 of conventional type, which is configured to suspend containers 40 on fixtures (not shown). The conveyor 300 is operable to feed the containers 40 in the feed direction X. The containers 40 may or may not contain the food product at this stage. Cap modules 41 are transported on a stationary transportation track 200 which extends beneath the conveyor 300 and comprises a tiled pattern of base elements (20 in FIG. 2A). The first magnetic arrangements of the tiled base elements may be seen to collectively form a first magnetic arrangement of the transportation track 200, which is connected to receive the control signals S1-Sn from the control device (30 in FIG. 2A). In FIG. 6, a trail of carriers 21 are propelled in a feed direction along the track 200, in parallel to the feed direction of the conveyor 300. An upstream distribution device (not shown) has placed one cap module 41 on each carrier 21. As seen in FIG. 6, a carrier 21 is moved (in the X dimension, and optionally also in the Y dimension) to bring the cap module 41 into alignment with a container 40 and is then lifted vertically in the levitation dimension (Z dimension) towards the container 40 to engage the cap module 41 with the container 40. Thereby, the cap module 41 is attached to the container 40 by an adhesive which has been applied onto the cap module 41 and/or the container 40 by an upstream applicator device 400. The support surface 25 is held in the lifted position to press the cap module 41 onto the container 40 until the adhesive has settled and is then lowered to its original elevation on the track 200 and is propelled away, e.g. to return with another cap module 41.

In one implementation, which is applicable to all embodiments, the speed of the respective carrier 21 in the feed direction X is adapted to the speed of the conveyor 300 in the same direction when the respective carrier 21 is lifted, to ensure safe and precise engagement between the cap module 41 and the container 40. In one example, the movement of the conveyor 300 and the respective carrier 21 in the XY plane is intermittently stopped when the support surface 25 is lifted. In another example, the conveyor 300 moves continuously at a predefined speed, and the speed of the respective carrier 21 is matched to the predefined speed, at least when the support surface 25 of the respective carrier 21 is lifted.

FIG. 7 shows another embodiment of a capping station, which is adapted to attach a threaded lid 41A to a threaded body 41B on a container 40. The structure of the capping station is the same as in FIG. 6 and will not be described. The applicator device 400 is not needed in this embodiment. The embodiment in FIG. 7 differs in that the support surface 25 of the respective carrier 21 is not only lifted to engage the lid 41A with the body 41B but is also rotated to screw the lid 41A onto the body 41B. Specifically, the respective carrier 21 is first moved to align the rotation axis C of the carrier 21 with a vertical center axis C' of the body 41B on the container 40, whereupon the support surface 25 is lifted and given a controlled rotation ω around the rotation axis C.

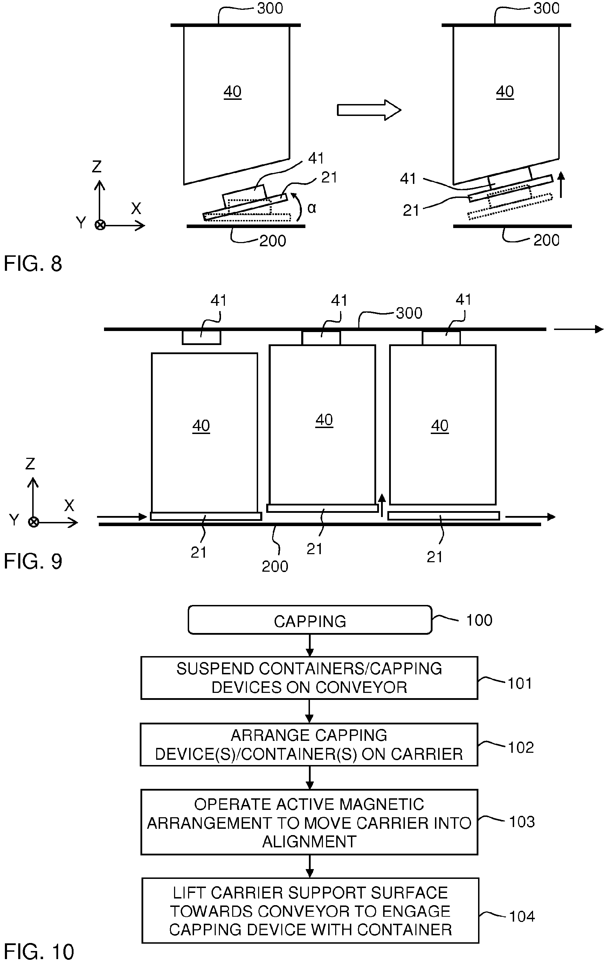

FIG. 8 shows another embodiment of a capping station, which is adapted to attach a cap module 41 to an inclined surface of a container 40. The inclined surface is thus non-parallel to the track 20. The structure of the capping station is the same as in FIG. 6 and will not be described. The embodiment in FIG. 8 differs in that the support surface 25 of the respective carrier 21 is not only lifted but also tilted in relation to the track 200 to align the top surface of the cap module 41 with the inclined surface of the container 41. In the illustrated example, the support surface 25 is tilted by a pitch angle α in the X dimension.

It should be realized that the embodiment in FIG. 8 may be further modified for attaching a threaded lid 41A to a threaded base 41B on the container, by also rotating the carrier 21 around its rotation axis C, by analogy with the embodiment in FIG. 7.

It should also be understood that all of the foregoing embodiments are equally applicable to a capping station in which cap modules 41 or lids 41A are suspended from the conveyor 300, and the containers 40 are arranged on the carriers 21. FIG. 9 shows an example of such an embodiment, in which the respective carrier 21 is moved on the track 200 to align a container 40 with a suspended cap module 41 and is then lifted vertically in the levitation dimension towards the cap module 41 to engage the container 40 with the cap module 41. By analogy with the embodiment in FIG. 6, the cap module 41 is attached to the container 40 by an adhesive which has been applied onto the cap module 41 and/or the container 40 by an upstream applicator device (cf. 400 in FIG. 6).

In all embodiments herein, it is conceivable that more than one item, be it a cap module 41, a lid 41A or a container 40, are arranged on the respective carrier 21.

The attachment of capping devices 41, 41A to containers 40 by lifting, and optionally tilting and/or rotating, carriers 21 of a magnetically suspended planar motor as described in the foregoing may be implemented in a capping machine (cf. 13 in FIG: 1) which is thereby rendered significantly less mechanically complex than existing capping machines. Further, the capping machine may be adapted to various types and sizes of containers and capping devices by modification of the control program of the control device 30 to achieve, for the respective carrier 21, the required motion in the plane of the track 200 and lifting (levitation) from the track 200, and optionally tilting (pitching and/or rolling) and/or rotating (yawing) in relation to the track 200. Clearly, the need for structural modifications of the capping machine is reduced.

The sequence of events described above with reference to FIGS 5-9 may correspond to a capping method 100 shown in FIG. 10. In step 101, one or more first items are arranged to be suspended from a conveyor 300. In step 102, one or more second items are arranged support surfaces 25 of carriers 21, which are located on a transportation track 200. In one embodiment (cf. FIGS 6-8), the first items are containers 40, and the second items are capping devices, e.g. cap modules 41 or lids 41A. In another embodiment (cf. FIG. 9), the first items are capping devices, e.g. cap modules 41 or lids 41A, and the second items are containers 40. In step 103, the active magnetic arrangement (in the track 200 or the carrier 21, depending on implementation) is operated to move the respective carrier 21 on the transportation track 200 into an attachment position beneath the conveyor 300 to align a second item on the respective carrier 21 with a first item suspended by the conveyor 300. In step 104, when the respective carrier 21 is in the attachment position, the carrier is controlled to move its support surface 25 towards the suspended conveyor 300 to engage the second item with the first item. The method 90 may be executed based on control signals from the control device 30 in FIG. 2A.

## Claims

1. An apparatus for attaching capping devices (41; 41A) to containers (40) for a system for production of packaged food products, said apparatus comprising:
a conveyor (300) configured to suspend first items,
a transportation track (200), and
a plurality of carriers (21) for arrangement on the transportation track (200), the respective carrier (21) comprising a support surface (25) for one or more second items,
wherein the first items are capping devices (41; 41B) and the second items are containers (40), or vice versa,
**characterized by** that the transportation track (200) comprises a first magnetic arrangement (22, 23), and the respective carrier (21) comprises a second magnetic arrangement (24),
said apparatus further comprising a control device (30) which is configured to operate one of the first and second magnetic arrangements (22, 23; 24) to move the respective carrier (21) on the transportation track (200) into a position beneath the conveyor (300) to align a second item on the respective carrier (21) with a first item suspended by the conveyor (300),
wherein the control device (30) is further configured to move the support surface (25) of the respective carrier (21) towards the suspended conveyor (300) to engage the second item with the first item.

2. The apparatus of claim 1, wherein the capping device (41) comprises a body part (41B) defining an opening (42) and a lid part (41A) arranged to cover the opening (42).

3. The apparatus of claim 1 or 2, wherein the apparatus further comprises a device (400) configured to apply an adhesive to at least one of the first and second items.

4. The apparatus of claim 1 or 2, wherein the control device (30) is further configured, when engaging the second item with the first item, to rotate the support surface (25) around an axis (C) which is perpendicular to the support surface (25).

5. The apparatus of claim 4, wherein the capping device is a lid part (41A) with a first thread (43A), and the container (40) comprises a tubular portion with a second thread (43B), wherein rotating the support surface (25) engages the first and second threads (43A, 43B).

6. The apparatus of any preceding claim, wherein the control device (30) is further configured to, when engaging the second item with the first item, tilt the support surface (25) from a horizontal plane to align a top surface of the second item with an bottom surface of the first item.

7. The apparatus of any preceding claim, wherein the control device (30) is configured to adapt the speed of the selected carrier (21) in a feed direction (X) to the speed of the conveyor (300) in the feed direction (X).

8. The apparatus of any preceding claim, wherein the control device (30) is configured to operate at least one of the first and second magnetic arrangements (22, 23; 24) to move the respective carrier (21) towards the suspended conveyor (300) to engage the second item with the first item.

9. The apparatus of any preceding claim, wherein the respective carrier (21) comprises a moveable platform (26) that defines at least part of the support surface (25) and a platform actuator (27) for moving the platform (26) in relation to the carrier (21), wherein the control device (30) is configured to operate the platform actuator (27) to move the support surface (25) of the respective carrier (21) to engage the second item with the first item.

10. The apparatus of any preceding claim, wherein the respective carrier (21) comprises a gripping mechanism (28A; 28B; 28C; 28D) for engaging the one or more second items on the support surface (25).

11. The apparatus of any preceding claim, wherein the first magnetic arrangement (22, 23) comprises an array of coils (22), and the second magnetic arrangement comprises an array of magnets (24).

12. The apparatus of any preceding claim, wherein the control device (30) is further configured to operate at least one of the first and second magnetic arrangements (22, 23; 24) to levitate the respective carrier (21) over the transportation track (200), while the respective carrier (21) is moved on the transportation track (200).

13. A method of attaching capping devices (41; 41A) to containers (40) for a system for production of packaged food products, said method comprising:
arranging (101) first items to be suspended from a conveyor (300),
arranging (102) second items on support surfaces (25) of carriers (21) on a transportation track (200), wherein the first items are capping devices (41; 41A) and the second items are containers (40), or vice versa, **characterized in that** said method comprising:
operating (103) one of a first magnetic arrangement (22, 23) in the transportation track (200) and a second magnetic arrangement (24) in the respective carrier (21) to move the respective carrier (21) on the transportation track (200) into a position beneath the conveyor (300) to align a second item on the respective carrier (21) with a first item suspended by the conveyor (300), and
controlling (104) the respective carrier (21) to move the support surface (25) towards the suspended conveyor (300) to engage the second item with the first item.

14. A computer readable medium comprising computer instructions which, when executed by a processing device (31), causes the processing device (31) to perform the method according to claim 13.

## Patentansprüche

1. Einrichtung zum Anbringen von Abdeckvorrichtungen (41; 41A) an Behältern (40) für ein System zur Herstellung von verpackten Nahrungsmittelprodukten, wobei die Einrichtung umfasst:
einen Förderer (300), der dazu ausgelegt ist, erste Gegenstände aufzuhängen,
eine Transportbahn (200), und
eine Vielzahl von Trägern (21) zur Anordnung auf der Transportbahn (200), wobei der jeweilige Träger (21) eine Auflagefläche (25) für einen oder mehrere zweite Gegenstände umfasst,
wobei die ersten Gegenstände Abdeckvorrichtungen (41; 41B) und die zweiten Gegenstände Behälter (40) sind, oder umgekehrt,
**dadurch gekennzeichnet, dass** die Transportbahn (200) eine erste magnetische Anordnung (22, 23) und der jeweilige Träger (21) eine zweite magnetische Anordnung (24) umfasst,
wobei die Einrichtung ferner eine Steuervorrichtung (30) umfasst, die dazu ausgelegt ist, eine der ersten und zweiten magnetischen Anordnung (22, 23; 24) zu betätigen, um den jeweiligen Träger (21) auf der Transportbahn (200) in eine Position unterhalb des Förderers (300) zu bewegen, um einen zweiten Gegenstand auf dem jeweiligen Träger (21) mit einem ersten Gegenstand auszurichten, der an dem Förderer (300) hängt,
wobei die Steuervorrichtung (30) ferner dazu ausgelegt ist, die Auflagefläche (25) des jeweiligen Trägers (21) in Richtung des Hängeförderers (300) zu bewegen, um den zweiten Gegenstand mit dem ersten Gegenstand in Eingriff zu bringen.

2. Einrichtung gemäß Anspruch 1, wobei die Abdeckvorrichtung (41) einen Gehäuseteil (41B), der eine Öffnung (42) definiert, und einen Deckelteil (41A), der dazu angeordnet ist, die Öffnung (42) abzudecken, umfasst.

3. Einrichtung gemäß Anspruch 1 oder 2, wobei die Einrichtung ferner eine Vorrichtung (400) umfasst, die dazu ausgelegt ist, einen Klebstoff auf mindestens einen des ersten und des zweiten Gegenstands aufzutragen.

4. Einrichtung gemäß Anspruch 1 oder 2, wobei die Steuervorrichtung (30) ferner dazu ausgelegt ist, beim Eingriff des zweiten Gegenstands mit dem ersten Gegenstand die Auflagefläche (25) um eine Achse (C) zu drehen, die rechtwinklig zur Auflagefläche (25) steht.

5. Einrichtung gemäß Anspruch 4, wobei die Abdeckvorrichtung ein Deckelteil (41A) mit einem ersten Gewinde (43A) ist und der Behälter (40) einen röhrenförmigen Abschnitt mit einem zweiten Gewinde (43B) umfasst, wobei das Drehen der Auflagefläche (25) das erste und das zweite Gewinde (43A, 43B) in Eingriff bringt.

6. Einrichtung gemäß einem der vorhergehenden Ansprüche, wobei die Steuervorrichtung (30) ferner dazu ausgelegt ist, beim Eingriff des zweiten Gegenstands mit dem ersten Gegenstand die Auflagefläche (25) aus einer horizontalen Ebene zu kippen, um eine obere Fläche des zweiten Gegenstands mit einer unteren Fläche des ersten Gegenstands auszurichten.

7. Einrichtung gemäß einem der vorhergehenden Ansprüche, wobei die Steuervorrichtung (30) dazu ausgelegt ist, die Geschwindigkeit des ausgewählten Trägers (21) in einer Vorschubrichtung (X) an die Geschwindigkeit des Förderers (300) in der Vorschubrichtung (X) anzupassen.

8. Einrichtung gemäß einem der vorhergehenden Ansprüche, wobei die Steuervorrichtung (30) dazu ausgelegt ist, mindestens eine der ersten und zweiten magnetischen Anordnung (22, 23; 24) zu betätigen, um den jeweiligen Träger (21) in Richtung des Hängeförderers (300) zu bewegen, um den zweiten Gegenstand mit dem ersten Gegenstand in Eingriff zu bringen.

9. Einrichtung gemäß einem der vorhergehenden Ansprüche, wobei der jeweilige Träger (21) eine bewegbare Plattform (26), die mindestens einen Teil der Stützfläche (25) definiert, und einen Plattformaktuator (27) zum Bewegen der Plattform (26) in Bezug auf den Träger (21) umfasst, wobei die Steuervorrichtung (30) dazu ausgelegt ist, den Plattformaktuator (27) zu betätigen, um die Stützfläche (25) des jeweiligen Trägers (21) zu bewegen, um den zweiten Gegenstand mit dem ersten Gegenstand in Eingriff zu bringen.

10. Einrichtung gemäß einem der vorhergehenden Ansprüche, wobei der jeweilige Träger (21) einen Greifmechanismus (28A; 28B; 28C; 28D) zum Greifen des einen oder der mehreren zweiten Gegenstände auf der Auflagefläche (25) aufweist.

11. Einrichtung gemäß einem der vorhergehenden Ansprüche, wobei die erste magnetische Anordnung (22, 23) eine Anordnung von Spulen (22) umfasst und die zweite magnetische Anordnung eine Anordnung von Magneten (24) umfasst.

12. Einrichtung gemäß einem der vorhergehenden Ansprüche, wobei die Steuervorrichtung (30) ferner dazu ausgelegt ist, mindestens eine der ersten und zweiten Magnetanordnung (22, 23; 24) zu betätigen, um den jeweiligen Träger (21) über der Transportbahn (200) schweben zu lassen, während der jeweilige Träger (21) auf der Transportbahn (200) bewegt wird.

13. Verfahren zum Anbringen von Abdeckvorrichtungen (41; 41A) an Behältern (40) für ein System zur Herstellung von verpackten Nahrungsmitteln, wobei das Verfahren umfasst:
Anordnen (101) erster Gegenstände, die an einen Förderer (300) gehängt werden sollen,
Anordnen (102) von zweiten Gegenständen auf Auflageflächen (25) von Trägern (21) auf einer Transportbahn (200), wobei die ersten Gegenstände Abdeckvorrichtungen (41; 41A) und die zweiten Gegenstände Behälter (40) sind, oder umgekehrt, **dadurch gekennzeichnet, dass** das Verfahren umfasst:
Betätigen (103) einer von einer ersten magnetischen Anordnung (22, 23) in der Transportbahn (200) und einer zweiten magnetischen Anordnung (24) in dem jeweiligen Träger (21), um den jeweiligen Träger (21) auf der Transportbahn (200) in eine Position unterhalb des Förderers (300) zu bewegen, um einen zweiten Gegenstand auf dem jeweiligen Träger (21) mit einem ersten Gegenstand auszurichten, der durch den Förderer (300) aufgehängt ist, und
Steuern (104) des jeweiligen Trägers (21), um die Auflagefläche (25) in Richtung des Hängeförderers (300) zu bewegen, um den zweiten Gegenstand mit dem ersten Gegenstand in Eingriff zu bringen.

14. Computerlesbares Medium, das Computeranweisungen umfasst, die beim Ausführen durch eine Verarbeitungsvorrichtung (31) die Verarbeitungsvorrichtung (31) veranlassen, das Verfahren gemäß Anspruch 13 durchzuführen.

## Revendications

1. Appareil pour fixer des dispositifs de capsulage (41 ; 41A) sur des récipients (40) pour un système de production de produits alimentaires conditionnés, ledit appareil comprenant :
un convoyeur (300) conçu pour suspendre des premiers articles,
une piste de transport (200), et
une pluralité de supports (21) à disposer sur la piste de transport (200), le support (21) respectif comprenant une surface de support (25) pour un ou plusieurs seconds articles,
les premiers articles étant des dispositifs de capsulage (41 ; 41B) et les seconds articles étant des récipients (40), ou vice versa,
**caractérisé en ce que** la piste de transport (200) comprend un premier agencement magnétique (22, 23), et le support (21) respectif comprend un second agencement magnétique (24),
ledit appareil comprenant en outre un dispositif de commande (30) qui est conçu pour actionner l'un des premier et second agencements magnétiques (22, 23 ; 24) pour déplacer le support (21) respectif sur la piste de transport (200) dans une position sous le convoyeur (300) pour aligner un second article sur le support (21) respectif avec un premier article suspendu par le convoyeur (300),
le dispositif de commande (30) étant en outre conçu pour déplacer la surface de support (25) du support (21) respectif vers le transporteur (300) suspendu pour mettre en prise le second article avec le premier article.

2. Appareil selon la revendication 1, le dispositif de capsulage (41) comprenant une partie corps (41B) définissant une ouverture (42) et une partie couvercle (41A) conçue pour couvrir l'ouverture (42).

3. Appareil selon la revendication 1 ou 2, l'appareil comprenant en outre un dispositif (400) conçu pour appliquer un adhésif à au moins l'un des premier et second articles.

4. Appareil selon la revendication 1 ou 2, le dispositif de commande (30) étant en outre conçu, lors de la mise en prise du second article avec le premier article, pour faire tourner la surface de support (25) autour d'un axe (C) qui est perpendiculaire à la surface de support (25).

5. Appareil selon la revendication 4, le dispositif de capsulage étant une partie couvercle (41A) avec un premier filet (43A), et le récipient (40) comprenant une partie tubulaire avec un second filet (43B), la rotation de la surface de support (25) mettant en prise les premier et second filets (43A, 43B).

6. Appareil selon l'une quelconque des revendications précédentes, le dispositif de commande (30) étant en outre conçu pour, lors de la mise en prise du second article avec le premier article, incliner la surface de support (25) à partir d'un plan horizontal pour aligner une surface supérieure du second article avec une surface inférieure du premier article.

7. Appareil selon l'une quelconque des revendications précédentes, le dispositif de commande (30) étant conçu pour adapter la vitesse du support (21) sélectionné dans une direction d'alimentation (X) à la vitesse du convoyeur (300) dans la direction d'alimentation (X).

8. Appareil selon l'une quelconque des revendications précédentes, le dispositif de commande (30) étant conçu pour actionner au moins l'un des premier et second agencements magnétiques (22, 23 ; 24) pour déplacer le support (21) respectif vers le transporteur (300) suspendu pour mettre en prise le second article avec le premier article.

9. Appareil selon l'une quelconque des revendications précédentes, le support (21) respectif comprenant une plate-forme mobile (26) qui définit au moins une partie la surface de support (25) et un actionneur de plate-forme (27) pour déplacer la plate-forme (26) par rapport au support (21), le dispositif de commande (30) étant conçu pour actionner l'actionneur de plate-forme (27) pour déplacer la surface de support (25) du support (21) respectif pour mettre en prise le second article avec le premier article.

10. Appareil selon l'une quelconque des revendications précédentes, le support (21) respectif comprenant un mécanisme de préhension (28A ; 28B ; 28C ; 28D) pour mettre en prise le ou les seconds articles sur la surface de support (25).

11. Appareil selon l'une quelconque des revendications précédentes, le premier agencement magnétique (22, 23) comprenant un réseau de bobines (22), et le second agencement magnétique comprenant un réseau d'aimants (24).

12. Appareil selon l'une quelconque des revendications précédentes, le dispositif de commande (30) étant en outre conçu pour faire fonctionner au moins l'un des premier et second agencements magnétiques (22, 23 ; 24) pour faire léviter le support (21) respectif sur la piste de transport (200), tandis que le support (21) respectif est déplacé sur la piste de transport (200).

13. Procédé de fixation de dispositifs de capsulage (41 ; 41A) sur des récipients (40) pour un système de production de produits alimentaires conditionnés, ledit procédé comprenant les étapes consistant à :
disposer (101) des premiers articles à suspendre à un convoyeur (300),
disposer (102) des seconds articles sur des surfaces de support (25) de supports (21) sur une piste de transport (200), les premiers articles étant des dispositifs de capsulage (41 ; 41A) et des seconds articles étant des récipients (40), ou vice versa, **caractérisé en ce que** ledit procédé comprend les étapes consistant à :
actionner (103) l'un d'un premier agencement magnétique (22, 23) dans la piste de transport (200) et d'un second agencement magnétique (24) dans le support (21) respectif pour déplacer le support (21) respectif sur la piste de transport (200) dans une position sous le convoyeur (300) pour aligner un second article sur le support (21) respectif avec un premier article suspendu par le convoyeur (300), et
commander (104) le support (21) respectif pour déplacer la surface de support (25) vers le transporteur suspendu (300) pour mettre en prise le second article avec le premier article.

14. Support lisible par ordinateur comprenant des instructions informatiques qui, lorsqu'elles sont exécutées par un dispositif de traitement (31), amènent le dispositif de traitement (31) à exécuter le procédé selon la revendication 13.
